# EUROPÄISCHE PATENTANMELDUNG

(11) **EP 1 169 908 A1**
(43) Veröffentlichungstag der Anmeldung: **09.01.2002**
(21) Anmeldenummer: 01113341.0
(22) Anmeldetag: 01.06.2001
(51) Int. Cl.: A01D 69/02, A01B 69/00

(54) **Fahrbares Bodenbearbeitungsgerät**

(30) Priorität: 02.06.2000 DE 10027531
(71) Anmelder: GARDENA Kress + Kastner GmbH, D-89079 Ulm (DE)
(72) Erfinder: Hanusch, Johannes, 01309 Dresden (DE)

(57) **Zusammenfassung**

Für ein fahrbares Bodenbearbeitungsgerät wird ein vorteilhafter Aufbau mit einem Verbrennungsmotor (4), welcher neben dem Bodenbearbeitungswerkzeug einen Generator (2) antreibt, welcher wiederum elektrische Leistung für einen Antrieb zur Fortbewegung des Geräts liefert, sowie eine Vorrichtung zur Führung eines automatisch fahrenden Bodenbearbeitungsgeräts angegeben. Das Bodenbearbeitungsgerät kann beispielsweise eine Kehrmaschine oder insbesondere ein Rasenmäher sein.

## Beschreibung

Die Erfindung betrifft ein fahrbares Bodenbearbeitungsgerät sowie eine Vorrichtung zur automatischen Führung eines solchen fahrbaren Bodenbearbeitungsgerät.

Fahrbare Bodenbearbeitungsgeräte sind beispielsweise in Form von Rasenmähern, Kehrmaschinen u. ä. bekannt. In einfacher Ausführung können solche Geräte durch Krafteinsatz einer Bedienperson bewegt sein. In anderer Ausführung können Räder motorisch angetrieben werden, wozu typischerweise mittels eines zusätzlichen Getriebeelements Motorleistung vom Antriebsmotor des Werkzeugs auch auf die Antriebsräder übertragen wird.

Aus der DE 40 22 699 C2 ist beispielsweise eine Vorrichtung zum selbsttätigen Mähen von Rasenflächen bekannt, bei welcher ein motorisch angetriebener Rasenmäher innerhalb eines durch Positionsgeber, mit welchen Kommunikationseinrichtungen auf Seiten des Rasenmähers in Verbindung treten können, markierten Geländes ohne weiteres Zutun einer Bedienperson entlang eines vorgebbaren Kurses führbar ist. Der Antriebsmotor wirkt auf lenkbare Vorderräder. Der Rasenmäher befindet sich im Ausgangszustand in einer ortsfesten Unterkunft, in welcher auch eine Ladestation für einen Energiespeicher des Rasenmähers vorgesehen ist, aus welchem ein elektrischer Antriebsmotor für die Räder und das Werkzeug gespeist ist. Die Vorgabe eines bestimmten vom Rasenmäher automatisch zu absolvierenden Kurses erfolgt vorzugsweise dadurch, daß in einem Lern- und Programmiergang der Rasenmäher handgeführt durch eine Person über das zu bearbeitende Gelände bewegt wird und dabei der Weg in einen Speicher des Rasenmähers einprogrammiert wird. Nach den gespeicherten Wegdaten erfolgt dann später ein Abfahren dieses vorgegebenen Kurses.

Der vorliegenden Erfindung liegt die Aufgabe zugrunde, eine Vorrichtung zur automatischen Führung eines fahrbaren Bodenbearbeitungsgeräts sowie ein insbesondere hierfür geeignetes fahrbares Bodenbearbeitungsgerät zu geben.

Erfindungsgemäße Lösungen sind in den unabhängigen Ansprüchen angegeben. Die abhängigen Ansprüche enthalten vorteilhafte Ausgestaltungen und Weiterbildungen der Erfindung.

Das erfindungsgemäße fahrbare Bodenbearbeitungsgerät weist in an sich bekannter Weise einen Verbrennungsmotor auf, welcher den Vorteil hat, daß der Kraftstoff eine hohe Energiedichte besitzt und daher eine große Energiereserve bei nur geringem Platzbedarf und Gewicht des Kraftstofftanks mit dem Kraftstoff als Energiespeicher benötigt wird. Durch die Kopplung eines Generators zur Erzeugung elektrischer Leistung mit dem Verbrennungsmotor kann dabei aber vorteilhafterweise bei dem Gerät ein weiterer, elektrisch gespeister Antrieb vorgesehen werden, dessen elektrische Antriebsleistung aus dem Generator, ggf. unter Zwischenschaltung eines elektrisch aufladbaren Energiespeichers wie eines Akkumulators entnommen ist. Der Akkumulator übernimmt in einem solchen Fall lediglich eine Glättung der vom Generator zu dem zusätzlichen Antrieb geführten elektrischen Leistung ohne elektrische Energie für einen längeren Betrieb bereithalten zu müssen. Der Akkumulator kann daher klein ausgeführt sein oder auch ganz entfallen. Der besondere Vorteil des elektrischen Betrieb des weiteren Antriebs liegt in der besonders einfachen und flexiblen Steuerbarkeit elektrischer Antriebe. Insbesondere kann auf einfache Weise die Leistungsaufnahme über einen weiten Bereich variiert oder auch eine Drehrichtungsumkehr vorgenommen werden. Der Verbrennungsmotor treibt direkt oder unter Zwischenschaltung eines Getriebes in an sich bekannter Weise das Werkzeug an, dessen Antrieb den überwiegenden Anteil der benötigten Leistung in dem Gerät ausmacht. Hierdurch wird ein besonders effektiver Einsatz des Kraftstoffs für den Werkzeugantrieb erreicht.

Besonders vorteilhaft ist eine derartige Kombination eines Verbrennungsmotors für den Werkzeugantrieb eines fahrbaren Bodenbearbeitungsgeräts mit einem elektrischen Antrieb zur Fortbewegung des Geräts durch Einwirkung des weiteren, elektrisch gespeisten Antriebs auf wenigstens ein Antriebsrad. Vorzugsweise sind mehrere Antriebsräder elektrisch angetrieben. Insbesondere können bei mehreren elektrisch angetriebenen Antriebsrädern des fahrbaren Bodenbearbeitungsgeräts die den einzelnen angetriebenen Rädern zugeführten Antriebsleistungen je Antriebsrad individuell gesteuert oder geregelt werden. Besonders vorteilhaft ist es dabei, jedem angetriebenen Rad einen eigenen Motor, insbesondere einen unmittelbar im oder am Rad angeordneten Radnabenmotor zuzuordnen. Vorteilhafterweise ist wenigstens ein Rad des fahrbaren Bodenbearbeitungsgeräts lenkbar. Die Lenkung kann dabei durch elektrische Stellmittel und/oder durch Aufteilung der Antriebsleistung auf verschiedene Antriebsräder steuerbar sein. Bei mehreren elektrisch angetriebenen Antriebsrädern können auch mehrere Räder zu gemeinsam gesteuerten Gruppen zusammengefaßt sein, beispielsweise zwei auf einer gemeinsamen Achse liegende Räder.

Der elektrische Antrieb von Antriebsrädern erlaubt ferner vorteilhafterweise eine Optimierung der Antriebsleistung durch individuelle Steuerung der Antriebsleistung in Abhängigkeit von der aktuellen Bodenhaftung der angetriebenen Räder, so daß ein Rad mit geringer Bodenhaftung nicht durch Zuführung zu großer Leistung durchdreht und die ihm zugeführte Antriebsleistung damit nicht zur Fortbewegung des Geräts beiträgt. Die Steuerung und die ggf. mehreren elektrischen Antriebsmotoren für die Räder können so ausgelegt sein, daß im Extremfall auch lediglich ein Antriebsrad elektrisch angetrieben ist und das Bodenbearbeitungsgerät bewegt. Die größte elektrische Antriebsleistung wird dem antreibbaren Rad zugeführt, welches aktuell die größte Bodenhaftung besitzt. Das Durchdrehen angetriebener Räder kann insbesondere dadurch vermieden werden, daß eine Anti-Schlupf-Regelung der elektrischen Antriebsleistung erfolgt.

Der weitere, aus dem Generator gespeiste Antrieb kann auch einen Antrieb für eine Zusatzwerkzeug umfassen, welches dadurch in seinem Einsatz auf einfache und flexible Weise unabhängig vom Einsatz des Haupt-Werkzeugs ist. Bei einem Rasenmäher kann beispielsweise ein Zusatzwerkzeug zur Lockerung des Rasens durch Entfernung von Moos und dgl. vorgesehen sein. Durch den elektrischen Antrieb ist ein solches Zusatzwerkzeug insbesondere auf besonders einfache Weise wahlweise zuschaltbar oder abschaltbar.

Gemäß einer Weiterbildung kann das Werkzeug durch eine Kupplung lösbar an den Verbrennungsmotor gekoppelt sein, wobei die Kupplung vorzugsweise eine elektrisch betätigbare Magnetkupplung ist. Das Bodenbearbeitungswerkzeug kann dadurch leicht abgeschaltet oder zugeschaltet werden. Beispielsweise kann bei Überlastung des Werkzeugs oder bei Kippen des Geräts das Werkzeug abgeschaltet werden. Ferner kann auch vorgesehen sein, den Verbrennungsmotor ohne Einsatz des Werkzeugs allein zum Antrieb des Generators einzusetzen und das Gerät lediglich als Stromaggregat zu verwenden, welches in einem solchen Fall vorteilhafterweise zur Erzeugung gängiger Spannungen, insbesondere im Bereich der Netz-Wechselspannung ausgelegt sein kann. Der Generator kann ferner in vorteilhafter Ausführung auch zum Start des Verbrennungsmotors eingesetzt werden, indem aus einem Starter-Akkumulator elektrische Leistungen für den dann als Startermotor wirkenden Generator entnommen wird. Auch bei einem solchen Startvorgang kann es vorteilhaft sein, das Bodenbearbeitungswerkzeug vom Verbrennungsmotor abzukoppeln um den Startvorgang zu erleichtern.

Die Erzeugung elektrischer Leistung durch den Generator ist auch vorteilhaft für den Einsatz des fahrbaren Bodenbearbeitungsgeräts in einer Vorrichtung zur automatischen Führung des Geräts, indem durch den Generator zuverlässig elektrische Leistung für den Betrieb einer elektrischen oder elektronischen Steuerung vorliegt. Eine solche Vorrichtung zur automatischen Führung eines fahrbaren Bodenbearbeitungsgeräts ist beispielsweise aus der einleitend genannten DE 40 22 699 C2 bekannt. Eine erfindungsgemäße Vorrichtung zur automatischen Führung eines fahrbaren Bodenbearbeitungsgeräts sieht vor, daß bei der Steuerung der automatischen Fortbewegung des Geräts auf einem vorgebbaren Weg die hierfür eingesetzten Kommunikationsmittel, welche eine geräteseitige Kommunikationseinrichtung und mehrere räumlich verteilte ortsfest angeordnete Stationen umfassen, hochfrequente elektromagnetische Signale unidirektional oder bidirektional übermitteln und daß die Stationen über dem Boden angeordnet sind. Hierdurch ist die Vorrichtung besonders einfach und flexibel aufbaubar und kommt mit nur wenigen, vorzugsweise lediglich drei oder vier ortsfesten Stationen aus. Lediglich in Geländen, wo Signalhindernisse die Kommunikation zwischen Gerät und einzelnen ortsfesten Stationen in Teilen des zu befahrenden Geländes abschatten, sind weitere ortsfeste Stationen notwendig. Durch die Anordnung der Stationen über dem Erdboden ist eine große Reichweite bei geringer Sendeleistung der hochfrequenten elektromagnetischen Signale erreichbar, so daß bei Einsatz aktiver ortsfester Stationen diese leitungsungebunden mit einem elektrischen Energiespeicher relativ geringer Kapazität betrieben werden können. Die elektrischen Energiespeicher der ortsfesten Stationen sind vorteilhafterweise gebräuchliche wiederaufladbare Akkumulatoren, vorzugsweise weisen die ortsfesten Stationen zusätzlich fotovoltaische Elemente auf, über welche die Akkumulatoren nachgeladen werden, so daß die ortsfesten Stationen im wesentlichen erwartungsfrei sind. Die ortsfesten Stationen können vorteilhafterweise in an sich beliebiger Anordnung positioniert werden, da in einer Lernphase die zu jeder Wegposition des Geräts charakteristischen Signalbeziehungen ermittelt und gespeichert werden. Die ortsfesten Stationen sind damit ohne besondere funktechnische Kenntnisse auch von Laien unproblematisch installierbar.

Von den ortsfesten Stationen abgestrahlte hochfrequente elektromagnetische Signale sind vorteilhafterweise stationsspezifisch codiert, insbesondere in Form von Frequenzen und/oder Zeitfolgen.

Die geräteseitige Kommunikationseinrichtung und/oder die Stationen können gemäß einer ersten vorteilhaften Ausführungsform zur Bestimmung der Einfallsrichtung empfangener Signale ausgebildet sein. Zusätzlich oder alternativ können die Kommunikationseinrichtung und/oder die Stationen zur Bestimmung von Signallaufzeiten und/oder Signallaufzeitsdifferenzen übermittelten elektromagnetischer Signale ausgebildet sein. Hierbei kann insbesondere auch vorgesehen sein, daß die geräteseitige Kommunikationseinrichtung stations-spezifische oder unspezifische Abfragesignale aussendet und die ortsfesten Stationen bei Empfang solcher Abfragesignale jeweils ein von der Kommunikationseinrichtung stationsspezifisch auswertbares Antwortsignal abgeben. Die Stationen können sich zwischen dem Aussenden von Antwortsignalen in einem Bereitschaftszustand mit geringer Leistungsaufnahme befinden, so daß der stationseigene Energiespeicher nur gering in Anspruch genommen wird und mit entsprechend kleiner Kapazität ausgeführt sein kann. Die Zeitdauer zwischen zwei aufeinanderfolgenden Abfragesignalen der geräteseitigen Kommunikationseinrichtung an eine Station bzw. zwischen zwei aufeinanderfolgenden Antwortsignalen einer Station beträgt dabei vorzugsweise im Mittel mehr als das zehnfache der Dauer eines Antwortsignals.

Gemäß einer günstigen Ausführungsform können die ortsfesten Stationen für die Aussendung von hochfrequenten elektromagnetischen Signalen zu der geräteseitigen Kommunikationseinrichtung eine Richtcharakteristik aufweisen, wodurch zum einen bei gleicher Sende-Feldstärke eine geringere Sendeleistung benötigt wird und zum anderen eine Störung durch die Signale außerhalb des abzudeckenden Geländes minimiert wird. Die ortsfesten Stationen sind in einem solchen Fall am Rand des Geländes anzuordnen und mit ihrer Abstrahlrichtung auf das Gelände zu richten.

Gemäß einer vorteilhafter Weiterbildung kann zusätzlich vorgesehen sein, daß beim Abfahren des vorgebbaren Wegs durch das Bodenbearbeitungsgerät auch noch Arbeitsfunktionen des Geräts ortsabhängig steuerbar sind, beispielsweise durch Variation der Schnitthöhe eines Rasenmähers in Abhängigkeit vom Ort, an welchem sich das Gerät befindet.

Die Erfindung ist nachfolgend anhand vorteilhafter Ausführungsbeispiele unter Bezugnahme auf die Abbildung noch eingehend veranschaulicht. Dabei zeigt
- Fig. 1: den prinzipiellen Aufbau eines automatisch fahrbaren Rasenmähers
- Fig. 2: den prinzipiellen Aufbau einer Vorrichtung zur automatischen Führung eines fahrbaren Bodenbearbeitungsgeräts
- Fig. 3: ein Schaltungsbeispiel einer Antriebselektronik für individuell antreibbare Räder eines fahrbaren Bodenbearbeitungsgeräts

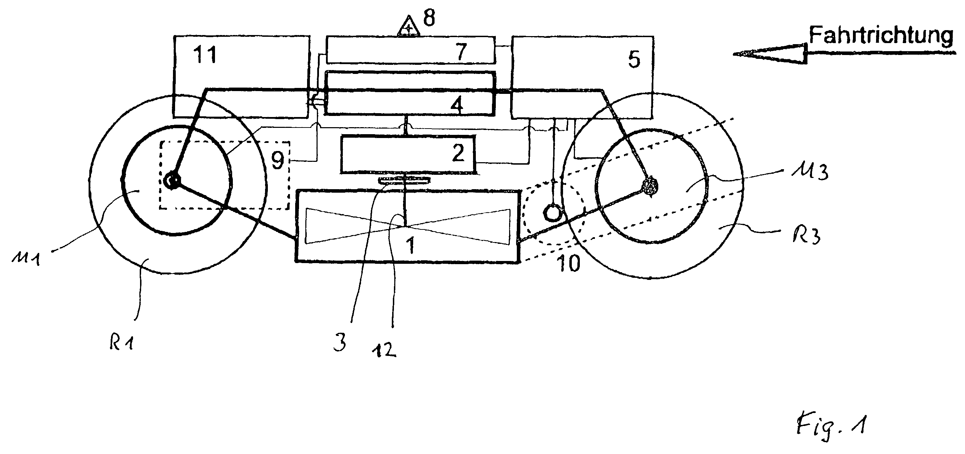

Bei dem in Fig. 1 prinzipiell skizzierten Rasenmäher als Beispiel für ein Bodenbearbeitungsgerät ist ein Mähwerk 1 in üblicher Anordnung zwischen front- und heckseitigen Antriebsrädern R1, R3 (weitere Räder R2, R4 verdeckt) in geringer Höhe über dem Boden angeordnet und um eine Messerwelle 12 drehbar. In Verlängerung der Messerwelle 12 über dem Mähwerk angeordnet ist Verbrennungsmotor 4. Der Kraftstoff für den Verbrennungsmotor wird in einem Kraftstoffbehälter 11 vorgehalten. Ein um eine Generatorwelle rotierbarer Generator 2 zur Erzeugung elektrischer Leistung ist mit der Motorwelle gekoppelt, wobei vorzugsweise Generatorwelle und Motorwelle koachsial liegen. Der Generator 2 speist eine Leistungselektronik 5, welche vorzugsweise auch einen Akkumulator als elektrischen Leistungspuffer enthält. Mit der Elektronik 5 verbunden ist eine Steuerung 7, welche eine Antenne 8 aufweist, über welche hochfrequente elektromagnetische Signale abgestrahlt und/oder empfangen werden können. Die Elektronik 5 treibt den einzelnen Antriebsrädern R1, R3 individuell zugeordnete und einzeln ansteuerbare Elektromotoren, insbesondere Radnabenmotoren M1, M3 (und verdeckt M2, M4 zu R2, R4) an, wobei die individuelle Ansteuerung der einzelnen Motoren durch die in der Steuerung 7 ausgewerteten Komrnunikationssignale von ortsfesten Stationen beeinflußt sein kann. Es kann ferner ein Lenksystem 9 zur Richtungseinstellung wenigstens eines oder mehrerer Antriebsräder vorgesehen sein, welche gleichfalls nach Maßgabe der Steuerung 7 elektrisch betätigbar ist. Der Generator kann zugleich als Startermotor für den Verbrennungsmotor 4 dienen, indem der Generator elektrische Leistung aus einem Akkumulator in der Elektronik 5 entnimmt. Zwischen Motor 4 und Mähwerk 1 kann vorteilhafterweise eine Magnetkupplung 3 eingefügt sein, über welche das Mähwerk elektrisch betätigt von dem Antriebsmotor abgekoppelt oder an diesen angekoppelt werden kann. Der Generator 2 kann für die Erzeugung von Niederspannung zur Ladung eines Akkumulators und/oder zur Erzeugung von Netzspannung zum Einsatz als Stromaggregat ausgelegt sein. Zusätzlich zu der Mähfunktion kann noch eine Einrichtung 10 zur Mähgutverarbeitung vorgesehen sein, welche beispielsweise im Auswurfkanal des Rasenmähers angeordnet ist und zur Zerkleinerung des Mähguts und/oder zur Pelletpressung dienen kann.

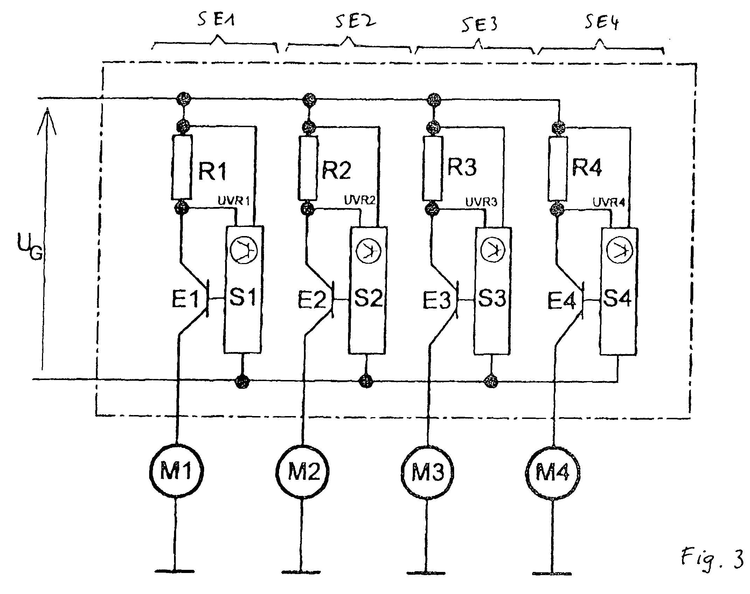

Der Verbrennungsmotor 4 treibt den Generator 2 an, und die von diesem erzeugte elektrische Energie wird der Leistungselektronik 5 zugeführt und von dieser an die in den vier Rädern R1 bis R4 angeordneten Antriebsmotoren M1 bis M4 geleitet, wobei individuelle Anti-Schlupf-Regelungen an den einzelnen Rädern vorgesehen sein können, um ein Durchdrehen einzelner Räder zu verhindern. Die Ansteuerung der mehreren individuellen Antriebsmotoren der einzelnen Räder kann beispielsweise nach der in Fig. 3 skizzierten Schaltungsanordnung erfolgen, bei welcher die Generatorspannung UG parallel an mehrere gleichartige Schaltungseinrichtungen SE1 bis SE4 gelegt ist, wobei die einzelnen Schaltungseinrichtungen individuell den Antriebsmotoren M1, M2, M3, M4 der Radmotoren zugeordnet sind. Eine erste Schaltungseinrichtung SE1 enthält beispielsweise einen Meßwiderstand R1 vor einer Leistungsendstufe E1, über welchen ein von dem dem Motor M1 zugeführten Strom abhängiger Spannungsabfall UVR1 gemessen und einer Regelschaltung S1 zugeführt ist, welche ihrerseits wieder die Endstufe E1 ansteuert. Die übrigen Schaltungseinrichtungen für die weiteren Motoren M2, M3, M4 sind in gleicher Weise aufgebaut. Bei großer Bodenhaftung z. B. an dem durch den Motor M1 angetriebenen Rad ist die Stromaufnahme für diesen Antriebsmotor M1 entsprechend der Motorcharakteristik hoch. Damit ergibt sich über R1 ein größerer Spannungsabfall UVR1 als z. B. über einen Meßwiderstand eines Motors, welcher bei durchdrehendem Rad eine geringere Strombelastung zeigt. Aus dem Spannungsabfall an dem jeweiligen Meßwiderstand kann somit eine Aussage über die Belastung abgeleitet und die Endstufe entsprechend gesteuert werden. Über die Steuerung der Endstufen können die auf die Räder ausgeübten Drehmomente eingestellt werden. Durch Kurzschließen von Ankerwicklungen der Antriebsmotoren können die Räder gebremst werden, durch Umpolen von Feldwicklungen läßt sich die Motor-Drehrichtung ändern. Hieraus resultiert insgesamt eine hohe Beweglichkeit und Geländegängigkeit des Geräts.

In der Steuerung 7 ist vorzugsweise ein Datenspeicher integriert, welcher in einer Lernphase, in welcher das Gerät unter dem Einfluß einer Bedienperson einen bestimmten Weg durchfährt, charakteristische Daten für diesen Weg entsprechend den mit ortsfesten Stationen ausgetauschten hochfrequenten Signalen speichert. Nach Abspeicherung von solchen charakteristischen Daten zu einem durch eine Bedienperson vorgegebenen Weg kann das Gerät in nachfolgenden Arbeitsphasen diesen Weg automatisch wiederholen. Die Führung des Geräts in einer Lernphase kann sowohl manuell als auch mittels einer Fernsteuerung erfolgen. Zusätzlich zu den charakteristischen Wegdaten können noch Arbeitsdaten in der Steuerung 7 gespeichert werden, welche ortsabhängig Bearbeitungsfunktionen des Geräts steuern können, beispielsweise ortsabhängig die Schnitthöhe variieren, wofür das Gerät nicht eingezeichnete elektrisch betätigbare Stellmittel zur Verstellung der Schnitthöhe aufweist.

Der vorzugsweise in der Elektronik 5 mit enthaltene Energiespeicher kann ein handelsüblicher Akkumulator sein, es können aber auch alternativ oder zusätzlich Hochleistungs-Kondensatoren vorgesehen sein.

Die vorzugsweise gegebene Lenkmöglichkeit eines oder mehrerer der Räder erfolgt vorzugsweise über elektrisch betätigte Stellmotoren.

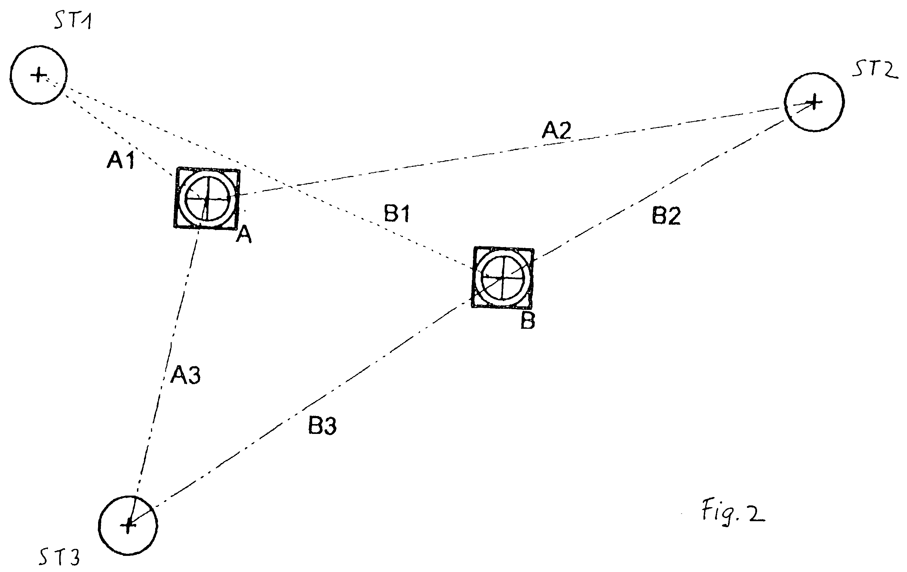

Bei der in Fig. 2 skizzierten Vorrichtung zur automatischen Führung eines fahrbaren Bodenbearbeitungsgeräts sind räumlich verteilt über dem Erdboden mehrere ortsfeste Stationen ST1, ST2, ST3, insbesondere Sendestationen zur Abgabe elektromagnetischer hochfrequenter Signale auf oder bei einem von dem Gerät zu befahrenden Gelände angeordnet. Das Gerät ist in zwei verschiedenen Positionen A und B eingezeichnet und empfängt in den verschiedenen Positionen A bzw. B von den einzelnen ortsfesten Stationen unterscheidbare Signale A1, A2, A3 bzw. B1, B2, B3, welche in einer geräteseitigen Kommunikationseinrichtung wie insbesondere der Steuerung 7 mit der Antenne 8 aus Fig. 1 nach Einfallsrichtung bezüglich des Gerätegehäuses und/oder nach Entfernung zu den ortsfesten Stationen auswertbar sind. Die Auswertung entspricht einer Koordinatenbestimmung für den jeweiligen Standort des Geräts und direkt oder über die Folge von zwei Standortbestimmungen dessen Fahrtrichtung im Gelände. Als charakteristische Wegdaten können Werte für Einfallswinkel und/oder Laufzeiten und/oder Laufzeitdifferenzen und/oder daraus abgeleitete Signale gespeichert werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere kann auch ein individueller Antrieb eines oder mehrerer Räder des fahrbaren Bodenbearbeitungsgeräts unabhängig von der Erzeugung elektrischer Energie in einem von einem Verbrennungsmotor angetriebenen Generator vorteilhaft sein und auch in Verbindung mit einem Elektromotor als Antriebsmotor des Bodenbearbeitungswerkzeugs realisiert sein. Die im Zusammenhang mit einem Rasenmäher beschriebenen Merkmale können insbesondere auch für den Betrieb und Aufbau einer Kehrmaschine von besonderem Vorteil sein.

## Patentansprüche

1. Fahrbares Bodenbearbeitungsgerät mit einem durch einen Verbrennungsmotor angetriebenen Werkzeug, **dadurch gekennzeichnet, daß** der Verbrennungsmotor gleichzeitig einen Generator antreibt, welcher elektrische Leistung erzeugt, und daß wenigstens ein weiterer Antrieb des Geräts aus dem Generator und/oder einem von diesem aufgeladenen elektrischen Energiespeicher mit elektrischer Antriebsleistung versorgt ist.

2. Gerät nach Anspruch 1, **dadurch gekennzeichnet, daß** der weitere Bewegungsantrieb auf wenigstens ein zur Fortbewegung des Geräts dienendes Antriebsrad wirkt.

3. Gerät nach Anspruch 2, **dadurch gekennzeichnet, daß** wenigstens ein Antriebsrad einen Radnabenmotor aufweist.

4. Gerät nach einem der Ansprüche 1 bis 3, **dadurch gekennzeichnet, daß** wenigstens ein Rad des Geräts lenkbar ist.

5. Gerät nach Anspruch 4, **dadurch gekennzeichnet, daß** die Lenkung des lenkbaren Rads elektrisch steuerbar ist.

6. Gerät nach einem der Ansprüche 2 bis 5, **dadurch gekennzeichnet, daß** mehrere Räder elektrisch antreibbar sind.

7. Gerät nach Anspruch 6, **dadurch gekennzeichnet, daß** die mehreren elektrisch antreibbaren Räder einzeln oder in unterschiedlichen Gruppen getrennt steuerbar sind.

8. Gerät nach Anspruch 6 oder 7, **dadurch gekennzeichnet, daß** Einrichtungen zur Erkennung der Bodenhaftung der antreibbaren Räder vorgesehen sind und die Ansteuerung der antreibbaren Räder in Abhängigkeit von deren Bodenhaftung erfolgt.

9. Gerät nach einem der Ansprüche 1 bis 8, **dadurch gekennzeichnet, daß** der weitere Antrieb einen Antrieb für ein Zusatzwerkzeug umfaßt.

10. Gerät nach Anspruch 8, **dadurch gekennzeichnet, daß** das Zusatzwerkzeug wahlweise zuschaltbar oder abschaltbar ist.

11. Gerät nach einem der Ansprüche 1 bis 10, **dadurch gekennzeichnet, daß** das Werkzeug über eine erste Kupplung an dem Verbrennungsmotor lösbar koppelbar ist.

12. Gerät nach einem der Ansprüche 1 bis 11, **dadurch gekennzeichnet, daß** der Generator über eine zweite Kupplung an den Verbrennungsmotor lösbar koppelbar ist.

13. Gerät nach Anspruch 11 oder 12, **gekennzeichnet durch** eine Magnetkupplung als erste und/oder zweite Kupplung.

14. Gerät nach einem der Ansprüche 1 bis 13, **dadurch gekennzeichnet, daß** das Gerät ein Rasenbearbeitungsgerät, insbesondere ein Rasenmäher mit einer Messeranordnung als Werkzeug ist.

15. Gerät nach einem der Ansprüche 1 bis 13, **dadurch gekennzeichnet, daß** das Gerät ein Kehrgerät mit einer rotierenden Bürstenanordnung als Werkzeug ist.

16. Vorrichtung zur automatischen Führung eines fahrbaren Bodenbearbeitungsgeräts mit einem auf wenigstens ein zur Fortbewegung des Geräts dienenden Antriebsrad wirkenden Antriebsmotor, mit einer Einrichtung zur automatischen Steuerung der Fortbewegung des Geräts auf einem vorgebbaren Weg, mit Kommunikationsmitteln zur drahtlosen Kommunikation zwischen einer Kommunikationseinrichtung des Geräts und mehreren räumlich verteilten, von dem Gerät getrennten, ortsfest angeordneten Stationen, welche stationsspezifische Signale zu dem Gerät übermitteln, und mit einer Steuerung, die die Fortbewegung des Geräts nach Maßgabe der zwischen Gerät und den Stationen übermittelten Signale steuert, **dadurch gekennzeichnet, daß** die Stationen über dem Boden angeordnet sind und die Übermittelten Signale hochfrequente elektromagnetische Signale sind.

17. Vorrichtung nach Anspruch 16, **dadurch gekennzeichnet, daß** die Stationen Hochfrequenzsender enthalten.

18. Vorrichtung nach Anspruch 16 oder 17, **dadurch gekennzeichnet, daß** die Stationen durch ein Abfragesignal von Seiten des Geräts zur Aussendung eines Signals aktivierbar sind.

19. Vorrichtung nach einem der Ansprüche 16 bis 18, **dadurch gekennzeichnet, daß** von den Stationen abgestrahlte Signale stationsspezifisch codiert sind.

20. Vorrichtung nach einem der Ansprüche 16 bis 19, **dadurch gekennzeichnet, daß** die geräteseitige Kommunikationseinrichtung und/oder die Stationen zur Bestimmung der Einfallsrichtung empfangener Signale ausgebildet sind.

21. Vorrichtung nach einem der Ansprüche 16 bis 20, **dadurch gekennzeichnet, daß** die geräteseitige Kommunikationseinrichtung und/oder die Stationen zur Bestimmung von Signallaufzeiten und/oder Signallaufzeitdifferenzen übermittelter elektromagnetischer Signale ausgebildet sind.

22. Vorrichtung nach einem der Ansprüche 16 bis 21, **dadurch gekennzeichnet, daß** die Steuerung zusätzlich Arbeitsfunktionen des Geräts nach Maßgabe der von den Stationen empfangenen Signale steuert.
